# EUROPEAN PATENT APPLICATION

(11) **EP 4 763 642 A1**
(43) Date of publication of application: **24.06.2026**
(21) Application number: 24221481.5
(22) Date of filing: 19.12.2024
(51) Int. Cl.: B60W 30/08

(54) **COMPUTER-IMPLEMENTED METHOD FOR TRAINING OF A MACHINE-LEARNING MODEL IN VEHICLE SAFETY ACTION ASSESSMENT FOR A TWO-WHEELED OR A THREE-WHEELED VEHICLE**

(71) Applicant: Autoliv Development AB, 447 37 Vårgårda (SE)
(72) Inventor: Ahmed, Jawwad, 447 37 Vårgårda (SE); Alkhoury, Ziad, 95800 Paris (FR)
(74) Representative: Westpatent AB

(57) **Abstract**

The present disclosure relates to a computer-implemented method for training of a machine-learning model in vehicle safety action assessment for a vehicle (1) adapted to travel in a forward movement direction (D). The method comprises preparing (S100) training data, which in turn comprises obtaining (S110) sets of sensor data used for determining movement data (120, 122, 130) for a vehicle driver (8) and optionally also for the vehicle (1). The method further comprises training (S200) the machine-learning model using the prepared training data by associating (S210) each set of sensor data with a safety action among a plurality of safety actions. The associating (S210) comprises setting (S211) a threshold level (T1, T2, T3) for each determined movement data (120, 122, 130), where each threshold level (T1, T2, T3) corresponds to a certain safety action.

## Description

The present disclosure relates to an improved computer-implemented method for training of a machine-learning model in vehicle safety action assessment for a two-wheeled or a three-wheeled vehicle.

It is well-known that motorcycle (MC) accidents can result in severe injuries or can turn fatal, where part of the reason is the more exposed nature of the rider on the MC as compared to the driver in a car, while the MC travels in the same speed intervals. Also, there is no restraint on the MC such as a seat belt as in a car. There are also other motion dynamics which make the MC rider, or MC driver, far more vulnerable in case of accident or a crash.

MCs with integrated airbag arrangements is an emerging technology which reduces the risk of severe injury or fatality in case of an MC accident, particularly in a frontal crash or slightly angled crash helping to resist the MC rider from being thrown out away from the MC as a result of the crash.

This can be life-saving when used effectively. However, it requires a real-time airbag triggering system to detect a crash in a few milliseconds and then subsequent triggering of a signal to inflate the airbag. A similar technology can also be used for a vest with one or more airbags or which inflates itself, or a smart helmet with one or more airbags, which are adapted to provide protection to the MC rider that wears at least one of the vest and the helmet when the MC rider is thrown away from the MC after the crash. Such a helmet may also be equipped with one or more devices that can issue one or more types of warnings, both visual and audio warnings as well as haptic warnings such as vibrations.

MC crashes mainly result in two types of outcomes, one where a fall can occur where rider falls out of the MC such as sideways because of loss of control or for other reasons such as an impact from other vehicle causing loss of control, etc. Secondly there can be a high intensity impact resulting in a crash such as a frontal crash, but rider/vehicle does not fall in this second case or may already be injured because of the impact before the fall.

There are numerous proposals regarding how to develop real time or non-real time crash detection systems based on motion sensors to detect these crash events. Sensors and associated apparatus can be integrated on the vehicle itself or on the rider (such as a fabric or a wearable). However, one of the main limitations or challenges relates to minimizing false positives and false negatives in such systems which rely on vehicle/rider motion without acquiring detailed contextual information. This is particularly true when the MC and the rider are subject to various kinds of stress scenarios and abuse cases which can generate high levels of abrupt motion activity, increasing the probability of false positives and false negatives generated by the crash detection system. This is also true when the MC rider for example is riding on bumpy or uneven roads.

Accident events of the above type occur also for other types of two- or three-wheeled vehicles such as bicycles, scooters and the like, MCs only being mentioned as an example.

In the light of this it is very useful to provide enhanced crash detection and crash assessment mechanisms which can provide robustness and minimize the risk of false positives as well as false negatives, and based on that activate a suitable safety mechanism configuration out of multiple available options depending on the need.

It is therefore desired to provide methods for providing training data and models for data-driven machine-learning algorithms, i.e. for data-driven machine-learning computer programs, that can provide such enhanced crash assessment, as well as corresponding enhanced determination of a certain safety action.

This is achieved by means of a computer-implemented method for training of a machine-learning model in vehicle safety action assessment for a two-wheeled or a three-wheeled vehicle that is adapted to travel in a forward movement direction. The method comprises preparing training data which in turn comprises obtaining and automatically collecting a plurality of sets of sensor data where the sensor data are used for determining movement data for a vehicle driver and optionally also for the vehicle. Each set of sensor data is collected during a corresponding time period. The method further comprises training the machine-learning model using the prepared training data. Training the machine-learning model comprises associating each set of sensor data with a safety action among a plurality of safety actions, where the associating comprises setting a threshold level for each determined movement data, where each threshold level corresponds to a certain safety action.

This means that sensor data that describes how the vehicle driver moves, and how the vehicle itself moves, will be used for determining a certain safety action. In this manner, each safety action can be matched to a certain type of driver movements.

According to some aspects, the determined movement data for the vehicle driver comprises acceleration and/or velocity for the vehicle driver and driver roll angle with respect to the forward movement direction. The determined movement data also comprises one of
- a first movement type where the vehicle driver slides on the seat mainly in the forward movement direction; or
- a second movement type where the vehicle driver mainly moves perpendicular to the forward movement direction, where the second movement type comprises a certain degree of vehicle driver roll.

This means that there are two different MC driver movement types that can be matched to different safety actions.

According to some aspects, the determined movement data for the vehicle comprises vehicle roll angle with respect to the forward movement direction.

In this way, the behavior of the MC 1 can be further established.

According to some aspects, training the machine-learning model is performed by collecting sensor data using at least one of a simulated environment, a vehicle simulator that is driven by a test person, and recorded driving sessions where drivers run test vehicles along test tracks.

This means that training data can be collected in many different ways, both in simulated environments and in real environments.

According to some aspects, the sensor data are collected using at least one of one or more camera sensor arrangements, pressure/occupancy sensors, accelerometers, gyroscopes, and speedometers.

This means that many types of available and well-known sensors can be used

This is also achieved by means of a computer-implemented method for determining a safety action for a two-wheeled or a three-wheeled vehicle. The method comprises acquiring a set of sensor data that is used for determining movement data for a vehicle driver and optionally also for the vehicle. The method further comprises determining a certain safety action among a plurality of safety actions using the collected set of sensor data, and launching the determined safety action.

In this manner, each safety action can be matched to a certain type of driver movements. This enables a proper safety action to be launched,

According to some aspects, the computer-implemented method further comprises determining the present safety action by implementing the trained machine-learning model being trained in accordance with the computer-implemented method according the above, and/or being trained in accordance with a computer-implemented method according to the above.

This means that the trained machine-learning model can be applied and used for determining a certain safety action among a plurality of safety actions using the collected set of sensor data.

According to some aspects, the computer-implemented method further comprises determining the present safety action by determining that an accident has occurred, comparing the movement data with at least one corresponding threshold and by determining a certain safety action, including taking no action, in dependence of the outcome of said comparison.

This provides an example of a stable and reliable model for determining the present safety action.

According to some aspects, the safety actions comprise inflating at least one airbag in a set of available inflatable airbags.

According to some aspects, the computer-implemented method further comprises inflating at least one airbag in dependence of the predicted vehicle driver falling/sliding trajectory. According to some further aspects, the computer-implemented method further comprises determining the present safety action by predicting an MC driver falling/sliding trajectory.

This enables the control unit to estimate if inflating an airbag is suitable or not.

The present disclosure also relates to computer programs, control units and systems that are associated with the above advantages.

Accordingly, it is here appreciated that the computer-implemented methods, the computer programs and the computer readable mediums, all as described herein, and in accordance with the present disclosure, may be realized in hardware, such as, the control unit, control unit arrangements and the devices, all as described herein, as well as, in the systems, as described herein. The hardware such as the control unit arrangements all as described herein, as well as, the systems, as described herein, are then arranged to perform the computer-implemented methods, and the computer programs, whereby the same advantages and effects are obtained as discussed for the computer-implemented methods herein.

### BRIEF DESCRIPTION OF DRAWINGS

The present disclosure will now be described more in detail with reference to the appended drawings, where:
- Figure 1: schematically illustrates a user who rides a motor bike and sensors;
- Figure 2: schematically illustrates a control unit;
- Figure 3: shows an example computer program product; and
- Figure 4A-4B: show flowcharts for methods according to the present disclosure; and
- Figure 5: shows a flowchart for methods according to examples.

### DETAILED DESCRIPTION

Aspects of the present disclosure will now be described more fully hereinafter with reference to the accompanying drawings. The different arrangements, devices, systems, computer programs and methods disclosed herein can, however, be realized in many different forms and should not be construed as being limited to the aspects set forth herein. Like numbers in the drawings refer to like elements throughout.

The terminology used herein is for describing aspects of the disclosure only and is not intended to limit the invention. As used herein, the singular forms "a", "an" and "the" are intended to include the plural forms as well, unless the context clearly indicates otherwise.

Modern data driven approaches based on ML (Machine-Learning) and DL (Deep Learning) provide more flexibility to automatically learn from the provided crash data, driving data from various roads and other stress tests. Also, these methods can adopt to the newer crash scenarios, vehicles, and variable as more and more data is available. Essentially, they can be retrained and learn new crash scenarios when provided with newer data.

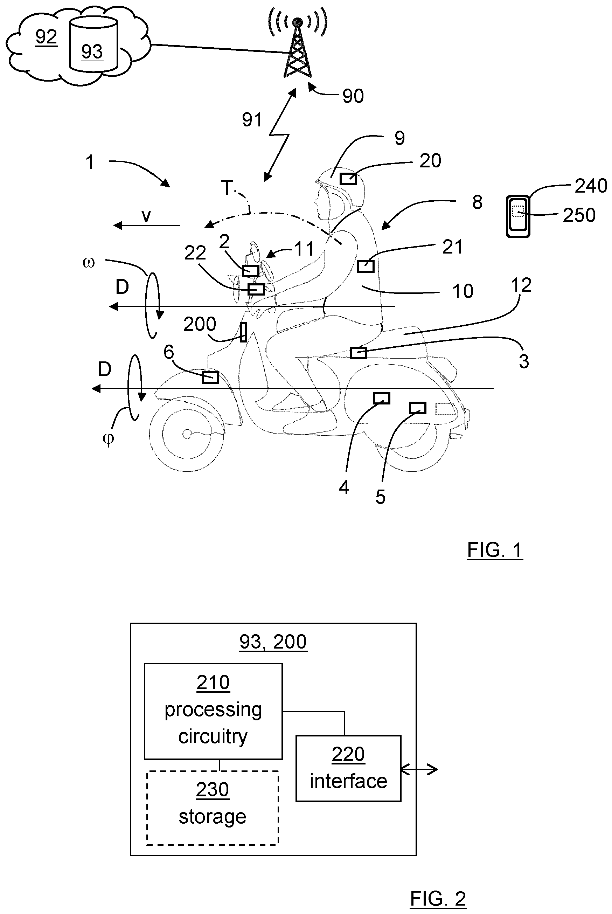

With reference to Figure 1, there is a subject 8 in the form of a rider 8 riding a vehicle in the form of a motorcycle (MC) 1, in the example the rider 8 is wearing a helmet 9 and a vest 10. In the following the MC rider will be referred to as an MC driver 8 or, more general, as a vehicle driver 8. It shall be appreciated that in this contest, a driver can also be regarded as a rider. According to some aspects, the MC 1 comprises a control unit 200 that is adapted to completely or partly process the methods as described herein. The methods as described herein may also, completely or partly, be processed at a remote server 93 and/or an external device processor 250, such as a mobile phone processor 250 comprised in a mobile phone 240, or a processor 250 comprised in any other type of external device 240.

It is to be noted that although MCs are used for illustrating the present disclosure, the present disclosure generally relates to any type of two- or three-wheeled vehicle, not only MCs.

According to some aspects, at least one of the helmet 9 and the vest 10 comprises one or more airbags 20, 21 which are adapted to provide protection to the MC driver 8 that wears at least one of the vest 10 and the helmet 9 when the MC driver 8 is thrown away from the MC 1 after a crash. Such a helmet 9 may also be equipped with one or more devices that can issue one or more types of warnings. Other protective pieces of garment are conceivable, such as for example belts. One or more airbags 22 may also be integrated with the MC 1.

With reference to Figure 1, Figure 4A and Figure 5, the present disclosure relates to a computer-implemented method training of a machine-learning model in vehicle safety action assessment for a two-wheeled or a three-wheeled vehicle 1 that is adapted to travel in a forward movement direction D. In the examples described, the vehicle is an MC 1, but any other type of two-wheeled or a three-wheeled vehicle is of course conceivable.

The method comprises preparing S100 training data, where preparing S100 training data comprises obtaining and automatically collecting S110 a plurality of sets of sensor data. The sensor data are used for determining movement data 120, 122, 130 for an MC driver 8 and optionally also for the vehicle 1, each set of sensor data 100 being collected during a corresponding time period.

The method further comprises training S200 the machine-learning model using the prepared training data, where training S200 the machine-learning model comprises associating S210 each set of sensor data with a safety action among a plurality of safety actions. The associating S210 comprises setting S211 a threshold level T1, T2, T3 for each determined movement data 120, 122, 130, where each threshold level T1, T2, T3 corresponds to a certain safety action.

A threshold level T1, T2, T3 is thus set for each determined movement data 120, 122, 130 for each set of sensor data such that that the threshold levels T1, T2, T3 can be continuously updated. This means that sensor data that describe how the MC driver 8 moves, and how the MC 1 itself moves, can be used for determining a certain safety action since each threshold level T1, T2, T3 corresponds to a certain safety action. In this manner, each safety action can be matched to a certain type of driver movements and optionally MC movement.

According to some aspects, the determined movement data for the MC driver 8 comprises acceleration and/or velocity for the MC driver 8, and a driver roll angle ω with respect to the forward movement direction D. The determined movement data further comprises one of a first movement type where the MC 8 driver slides on the seat 12 mainly in the forward movement direction D, or a second movement type where the MC driver 8 moves mainly perpendicular to the forward movement direction D.

In this context, the term mainly in the forward movement direction D means that means that the MC driver 8 slides on the seat 12 more in the forward movement direction D than perpendicular to the forward movement direction D. Correspondingly, in this context, the term mainly perpendicular to the forward movement direction D means that the MC driver 8 slides on the seat 12 more perpendicular to the forward movement direction D than in the forward movement direction D.

This means that there are two different MC driver movement types that can be matched to different safety actions.

For example, the MC driver 8 may slide on the seat 12 in the forward movement direction D because of a high intensity impact before being thrown out. As a result, the distance between the MC handlebar 11 and the MC driver 8 will rapidly decrease at a certain rate which indicates the occurrence of a crash.

According to some aspects, the determined movement data 120, 122, 130 for the vehicle comprises vehicle roll angle φ with respect to the forward movement direction D. The vehicle roll angle φ is sometimes also called leaning or a lean angel of the MC driver 8.

In this way, the behavior of the MC 1 can be further established.

According to some aspects, training S200 the machine-learning model is performed by collecting sensor data 100 using at least one of a simulated environment, a vehicle simulator that is driven by a test person; and recorded driving sessions where drivers run test vehicles along test tracks.

This means that training data, in particular sensor data 100, can be collected in many different ways, both in simulated environments and in real environments. In particular, when a trained machine-learning model is run in a real user situation, more training data is collected continuously and preferably put together centrally for all MCs that run and are equipped with the required data collection system.

According to some aspects, the sensor data are collected using at least one of one or more camera sensor arrangements 2, pressure/occupancy sensors 3, accelerometers 4, gyroscopes 5, and speedometers 6. This means that many types of available and well-known sensors can be used

This enables a multi-modality approach with different type of sensors also with some alternate options depending on the need, cost, and availability.

According to some aspects, the sensors can have a camera-based approach using a high frame-rate camera sensor arrangement 2 with a camera device 2 that is mounted on or close to handlebar 11, facing the MC driver 8. Alternatively, or in combination, the camera sensor arrangement 2 may comprise a camera device (not shown) mounted on the driver's vest 10 facing the front side/handlebar 11 and/or a camera device (not shown) mounted on the helmet 9 where it has a view of the handlebar 11 or dashboard.

Such arrangements as described above can for example be used to detect movement data for the vehicle driver 8 sliding on the seat 12 in a rapid motion towards the handlebar 11 or dashboard. Oher types of sensor can detect extreme and rapid rolls of the MC 1 and the MC driver 8.

According to some aspects, fall-based crashes which mostly occur where a MC driver 8 is thrown away sideways from the MC 1 can also be detected by the same camera arrangement that can detect a rapid roll of the MC 1 and/or moving of the MC driver 8 out camera view rapidly, for example if a camera is mounted on the handlebar 11 with a view of the MC driver 8 or alternatively on a vest/garment with a view of the dashboard. Note that motion sensors can be used as an alternative technology to detect the extreme and rapid roll of the MC 1 or the MC driver 8 using a suitable algorithm. Fall-based crashes can occur on their own or can eventually follow other non-fall crashes such as a frontal crash with a certain time lag.

Note that the present disclosure is not limited to camera arrangements, for example a radar-based sensor can be used to provide depth information, and may also be used to estimate the distance between the MC driver 8 and handlebar 11 or dashboard in real-time.

On or more pressure/occupancy sensors 3 can be mounted in the seat 12 of the MC 1. Frontal crashes or variants resulting in the MC driver 8 sliding forwards will lead to a pressure drop/change on the seat 12, or in different zones of seat 12 indicating forward sliding of the driver, as well as rapid changes in occupancy sensor signals because the MC driver 8 is in the process of being thrown away from the MC 1, eventually after sliding for a certain time in the event of a crash. This will likely happen both in fall and non-fall type of MC crashes. However, the MC driver 8 sliding may not happen in fall-related crashes such as due to loss of control that is not related to an impact.

The detected pressure drop/change on the seat 12 is due to certain rapid pressure variations or occupancy pattern variations in the MC seat area 12 which can be used as additional support signal of the occurrence of a crash. This may also require less data processing as compared to a high-speed camera arrangement in case a camera arrangement is not used.

Suitably, according to some aspects, the trained machine-learning model is plugged-in to work together with any suitable off the shelf standard crash detection system for MCs with the purpose of enhancing its robustness by minimizing the false negatives and false positives of the standard crash detection system and hence increase the robustness. Such a standard crash detection system may for example comprise an MC accident event detection algorithm, and relies on detecting patterns of motion which belong to a vehicle accident such as a crash where the MC 1 moves in a sudden and unexpected manner.

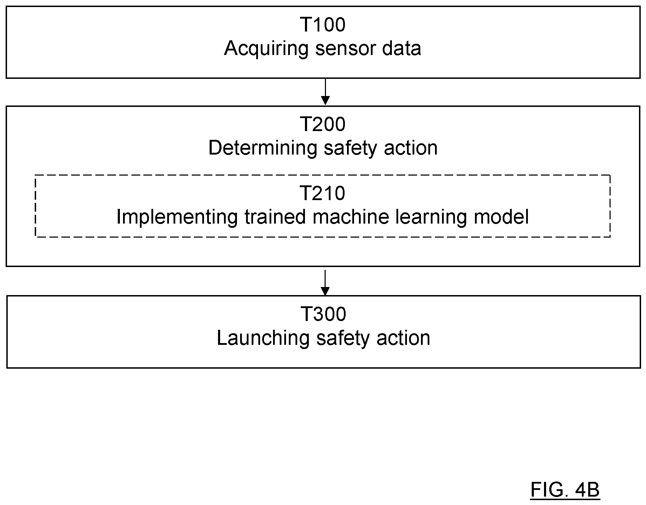

With reference to Figure 1, Figure 4B and Figure 5, the present disclosure relates to a computer-implemented method for determining a safety action for a two-wheeled or a three-wheeled vehicle 1, and also for launching a determined safety action. The method comprises acquiring T100 a set of sensor data 100 that is used for determining movement data 120, 122, 130 for a vehicle driver 8 and optionally also for the vehicle 1. The method further comprises determining T200 a certain safety action 124, 132 among a plurality of safety actions 124, 132 using the collected set of sensor data 110, and
launching T300 the determined safety action 124, 132.

In this manner, each safety action can be matched to a certain type of driver movements. This enables a proper safety action to be launched, for example inflating an airbag 22 at the handlebar 11. It is to be noted that the computer-implemented method for determining a safety action according to the above does not need a trained machine-learning model to run, and not even be based on an ML system. All sensor data processing and calculations can be performed analytically, without the help of a trained machine-learning model.

Based on the movement data, and possibly a trajectory T prediction as will be described more in detail below, a suitable position to trigger an active safety solution that is tailored for frontal type of crashes can be determined. This is very useful for certain inflatable airbag solutions for safety installed on MCs which requires the MC driver to be in a suitable position when a certain safety action is to be triggered or launched. If the MC driver 8 is in a less suitable position when a certain safety action is triggered or launched, the safety action can provide more harm than good.

According to some aspects, the computer-implemented method further comprises determining T200 the present safety action 124, 132 by implementing T210 the trained machine-learning model being trained in accordance with the computer-implemented method as described herein, and/or being trained in accordance with the computer-implemented method as described herein.

This means that the trained machine-learning model can be applied and used for determining T200 a certain safety action 124, 132 among a plurality of safety actions 124, 132 using the collected set of sensor data 110.

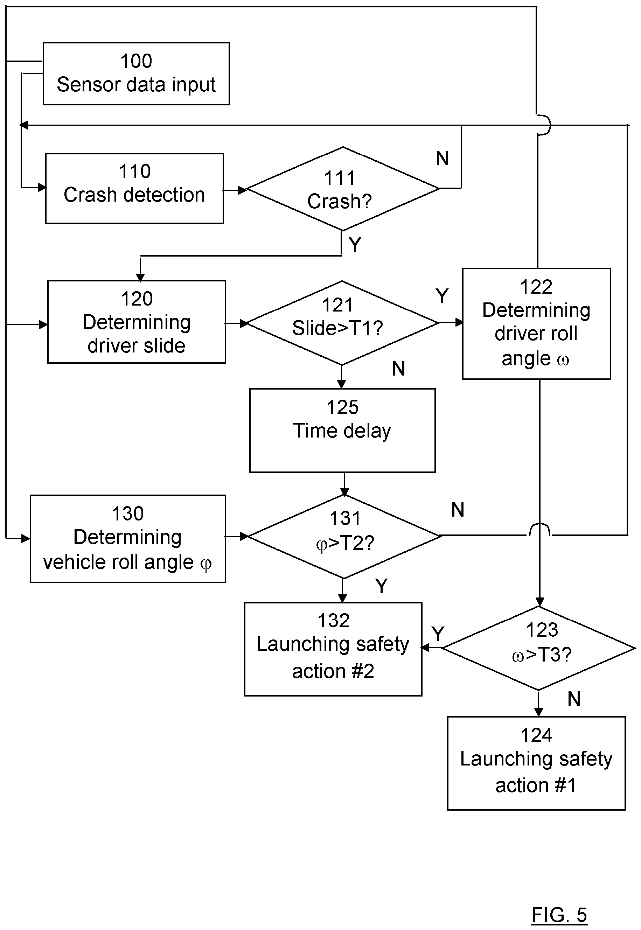

According to some aspects, as shown in Figure 5, the computer-implemented method further comprises determining T200 the present safety action 124, 132 by determining 111 that an accident has occurred, comparing 121, 123, 131 the movement data 120, 122, 130 with at least one corresponding threshold level T1, T2, T3, and determining a certain safety action 124, 132, including taking no action, in dependence of the outcome of said comparison 121, 123, 131.

This provides an example of a stable and reliable model for determining the present safety action.

In the example in Figure 5, sensor data input 100 is used for crash detection 110, suitable by using an off the shelf standard crash detection system.

Sensor data input 100 is also used for determining 120 driver slide, determining 130 vehicle roll angle φ and for determining 122 driver roll angle ω.

If it is determined 111 that a crash has occurred, it is determined 121 whether the determined driver slide 120 exceeds a first threshold level T1, and if that is the case it is determined 121 whether the determined driver roll angle ω exceeds a third threshold level T3. If that is not the case, a first type safety action is launched 124. If that is the case, a second type safety action is launched 132.

If the determined driver slide 120 falls below the first threshold level T1, it is determined 131 whether the determined vehicle roll angle φ exceeds a second threshold level T2 after a certain time delay 125. If that is the case, the second type safety action is launched 132, otherwise the detected crash 111 is disregarded.

According to some aspects, the safety actions 124, 132 comprise inflating at least one airbag 20, 21, 22 in a set of available inflatable airbags 20, 21, 22.

According to some aspects, the set of available inflatable airbags 20, 21, 22 comprises at least two inflatable airbags 20, 21, 22 positioned in a driver's helmet 9, in a driver's vest 10 and/or on the vehicle 1. As mentioned previously, at least one of the helmet 9 and the vest 10 may comprise one or more airbags 20, 21, and the MC 1 may also comprise one or more airbags 22, for example at the handlebar 11. The vest 10 may even be an inflatable vest.

Generally, a driver's helmet 9, vest 10 and other wearable equipment such as backpack is instituted by a driver's wearable. Therefore, according to some aspects, the set of available inflatable airbags 20, 21, 22 comprises at least two inflatable airbags 20, 21, 22 positioned in a driver's wearable 9, 10 and/or on the vehicle 1.

There may be only one airbag or even not airbags at all. There may be other types of safety mechanisms present to trigger when launching safety actions such as for example emergency braking or speed reduction.

According to some aspects, the first type safety action can provide the most comprehensive protection to the MC driver 8 in case it is detected that the MC driver 8 is involved in a frontal crash which is followed by the fall of the MC 1 itself. This can include the activation of the inflatable bag 22 which is installed on the MC 1 to be activated to mitigate the possible injuries from the frontal impact and also trigger inflation of the vest and helmet airbags 20, 21.

According to some aspects, the second type safety action activates a subset of the available protection involving the inflation of the helmet and vest airbags 20, 21. Since in this case a frontal impact is not detected, the airbag 22 on the MC 1 is not activated as it cannot provide any suitable protection to the driver in such crash scenario but rather can potentially cause an injury.

The MC 1, helmet 9 and/or the vest 10 may additionally or alternatively be equipped with any other active safety technology as well.

The above safety action types are of course only examples that illustrate the versatility of the present disclosure. There may of course be more and/or other types of safety action types.

According to some aspects, the present disclosure also relates to predicting a MC driver 8 falling/sliding trajectory T in a pre-crash scenario. According to some aspects, the computer-implemented method further comprises inflating at least one airbag 20, 21, 22 in dependence of the predicted vehicle driver falling/sliding trajectory T.

This enables the control unit 93, 200, 250 to estimate if inflating an airbag is suitable, if the MC driver 8 is in correct position, or not suitable, if the MC driver 8 is out of position. Not suitable positions could be due to reasons such as the MC driver 8 being in a position where inflating airbags will not be effective to protect the MC driver 8 or where the MC driver 8 is in such a position/posture that inflating the airbag can hurt the MC driver 8 or obscure his view of road situation.

Predicting a trajectory T can for example be done using a number of frames of a video feed of a camera arrangement using the trained machine-learning algorithm. Note that this not limited to the camera arrangement, for example a radar-based sensor providing depth information may also be used to estimate the distance between the MC driver 8 and handlebar 11 or dashboard in real-time.

According to some aspects, vehicle safety action assessment also comprises vehicle accident event detection, vehicle accident event characterization and/or computation of accident event risk probability.

The present disclosure is, according to some aspects, applicable for users, riders or drivers that travel on, or in, any kind of two-wheeled or a three-wheeled vehicle.

Figure 2 schematically illustrates, in terms of a number of functional units, the components of a control unit 93, 200, 250 according to an embodiment.

Processing circuitry 210 is provided using any combination of one or more of a suitable central processing unit (CPU), multiprocessor, microcontroller, digital signal processor (DSP), dedicated hardware accelerator, etc., capable of executing software instructions stored in a computer program product, e.g. in the form of a storage medium 230. The processing circuitry 210 may further be provided as at least one application specific integrated circuit (ASIC), or field programmable gate array (FPGA) .

Particularly, the processing circuitry 210 is configured to cause the control unit 93, 200, 250 to perform a set of operations, or steps. These operations, or steps, were discussed above in connection to the various methods. For example, the storage medium 230 may store the set of operations, and the processing circuitry 210 may be configured to retrieve the set of operations from the storage medium 230 to cause the control unit 93, 200, 250 to perform the set of operations. The set of operations may be provided as a set of executable instructions. Thus, the processing circuitry 210 is thereby arranged to execute methods and operations as herein disclosed.

The storage medium 230 may also comprise persistent storage, which, for example, can be any single one or combination of magnetic memory, optical memory, solid state memory or even remotely mounted memory.

The control unit 93, 200, 250 may further comprise a communications interface 220 for communications with at least one other unit. As such, the communications interface 220 may comprise one or more transmitters and receivers, comprising analogue and digital components and a suitable number of ports for wired or wireless communication.

The processing circuitry 210 is adapted to control the general operation of the control unit 93, 200, 250 e.g. by sending data and control signals to the external unit and the storage medium 230, by receiving data and reports from the external unit, and by retrieving data and instructions from the storage medium 230. Other components, as well as the related functionality, of the control unit 93, 200, 250 are omitted in order not to obscure the concepts presented herein.

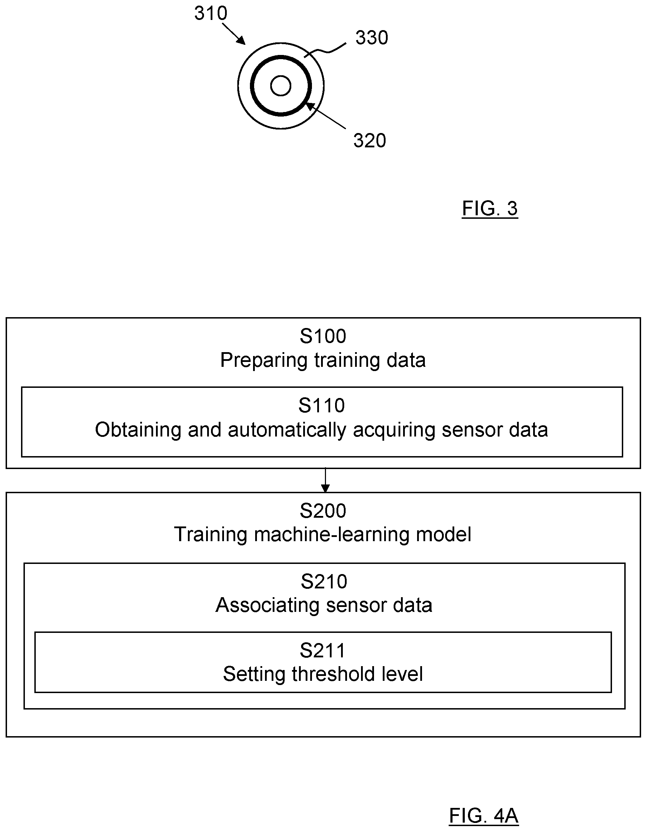

Figure 3 shows a computer program product 310 comprising computer executable instructions 320 arranged on a computer readable medium 330 to execute any of the methods disclosed herein.

The present disclosure also relates to a computer program 310, or computer program product 310, comprising computer readable instructions 320 for applying the computer-implemented method as described herein, and/or the preparation of training data, as described herein, and/or a computer readable medium 330 comprising said computer program 310.

The present disclosure also relates to a computer program 310, or computer program product 310, comprising computer readable instructions 320 for a machine-learning model as described herein, and/or a computer readable medium 330 comprising said computer program 310.

The present disclosure also relates to a control unit 93, 200, 250, for training of a machine-learning model, adapted to control at least, the implementing of the machine-learning model as described herein, and/or the preparation of training data as described herein.

According to some aspects, once the machine-learning model has been trained, it can at least partly be run on a remote server 93. According to some aspects, with reference to Figure 1, the computer-implemented method may be adapted to at least partly run on, and via, external units, for example a communication system 90 that provides wireless communication 91. This may, e.g., be a third generation partnership program (3GPP) defined access network like the fourth generation (4G) or the fifth generation (5G) access networks or a satellite system such as GPS. The access network may provide access to remote networks and other resources such as, e.g., the Internet.

In this manner training data can be collected from several users during normal running, such that the machine-learning model can be continuously updated.

It is also appreciated that some processing functions may be performed by resources in a remote network 92, such as the remote server 93.

The control unit 200 may be constituted by a control unit arrangement with one or more control unit parts that can be separate from each other. Some or all control unit parts may be comprised in a control unit arrangement 200 and/or the remote server 93, as well as an external device processor 250, such as a mobile phone processor 250 comprised in a mobile phone 240, or a processor 250 comprised in any other type of external device 240.

According to some aspects, the machine-learning model is trained and run based on a neural network architecture.

The present disclosure also relates to a system for training of a machine-learning model in vehicle safety action assessment for a two-wheeled or a three-wheeled vehicle 1, for communication of information, for enabling implementation of the machine-learning model as described herein, and for enabling the preparation of training data as described herein. The system comprises a machine-learning model, sensors 2, 3, 4, 5, 6 acquiring sensor data 100, and means 93, 200, 250 for processing data.

The system utilizes the computer program 310 as described herein, and/or the computer readable medium 330 as described herein.

Determining movement data 120, 122, 130 for a vehicle driver 8 and optionally also for the vehicle 1 means that movement data are determined at least for the vehicle driver 8, but may optionally also be determined for the vehicle 1 although it is not necessary for performing the invention.

## Claims

1. A computer-implemented method for training of a machine-learning model in vehicle safety action assessment for a two-wheeled or a three-wheeled vehicle (1) that is adapted to travel in a forward movement direction (D), where the method comprises
preparing (S100) training data,
where preparing (S100) training data comprises
obtaining and automatically collecting (S110) a plurality of sets of sensor data where the sensor data are used for determining movement data (120, 122, 130) for a vehicle driver (8) and optionally also for the vehicle (1), each set of sensor data (100) being collected during a corresponding time period;
and
training (S200) the machine-learning model using the prepared training data;
where training (S200) the machine-learning model comprises
associating (S210) each set of sensor data with a safety action among a plurality of safety actions; where the associating (S210) comprises
setting (S211) a threshold level (T1, T2, T3) for each determined movement data (120, 122, 130), where each threshold level (T1, T2, T3) corresponds to a certain safety action.

2. The computer-implemented method according to claim 1, wherein the determined movement data for the vehicle driver comprises acceleration and/or velocity for the vehicle driver and driver roll angle (ω) with respect to the forward movement direction (D), and one of
- a first movement type where the vehicle driver (8) slides on the seat (12) mainly in the forward movement direction (D); or
- a second movement type where the vehicle driver (8) mainly moves perpendicular to the forward movement direction (D), where the second movement type comprises a certain degree of vehicle driver roll.

3. The computer-implemented method according to any one of the claims 1 or 2, wherein the determined movement data (120, 122, 130) for the vehicle comprises vehicle roll angle (φ) with respect to the forward movement direction (D).

4. The computer-implemented method according to any one of the previous claims, wherein training (S200) the machine-learning model is performed by collecting sensor data (100) using at least one of
- a simulated environment;
- a vehicle simulator that is driven by a test person; and
- recorded driving sessions where drivers run test vehicles along test tracks.

5. The computer-implemented method according to any one of the previous claims, wherein the sensor data are collected using at least one of one or more
- camera sensor arrangements (2);
- pressure/occupancy sensors (3);
- accelerometers (4);
- gyroscopes (5); and
- speedometers (6).

6. A computer-implemented method for determining a safety action for a two-wheeled or a three-wheeled vehicle (1), comprising
acquiring (T100) a set of sensor data (100) that is used for determining movement data (120, 122, 130) for a vehicle driver (8) and optionally also for the vehicle (1);
determining (T200) a certain safety action (124, 132) among a plurality of safety actions (124, 132) using the collected set of sensor data (110); and
launching (T300) the determined safety action (124, 132).

7. The computer-implemented method according to claim 6, further comprising determining (T200) the present safety action (124, 132) by
implementing (T210) the trained machine-learning model being trained in accordance with the computer-implemented method according to any one of the claims 1-5, and/or being trained in accordance with a computer-implemented method according to any one of the claims 1-5.

8. The computer-implemented method according to any one of the claims 6 or 7, further comprising determining (T200) the present safety action (124, 132) by
determining (11) that an accident has occurred;
comparing (121, 123, 131) the movement data (120, 122, 130) with at least one corresponding threshold level (T1, T2, T3);
determining a certain safety action (124, 132), including taking no action, in dependence of the outcome of said comparison (121, 123, 131).

9. The computer-implemented method according to any one of the claims 6-8, further comprising determining (T200) the present safety action (124, 132) by predicting a vehicle driver 8 falling/sliding trajectory (T).

10. The computer-implemented method according to any one of the claims 6-9, wherein the safety actions (124, 132) comprise inflating at least one airbag (20, 21, 22) in a set of available inflatable airbags (20, 21, 22).

11. The computer-implemented method according to claim 10 when dependent on claim 9, further comprising inflating at least one airbag (20, 21, 22) in dependence of the predicted vehicle driver falling/sliding trajectory (T).

12. The computer-implemented method according to any one of the claims 10 or 11, wherein the set of available inflatable airbags (20, 21, 22) comprises at least two inflatable airbags (20, 21, 22) positioned in a driver's wearable (9, 10) and/or on the vehicle (1).

13. A computer program (310) comprising computer readable instructions (320) for applying the computer-implemented method according to claim 7, and/or the preparation of training data, according to any one of claims 1-5, and/or a computer readable medium (330) comprising said computer program (310).

14. A control unit (93, 200, 250), for training of a machine-learning model, adapted to control at least, the implementing of the machine-learning model according to claim 7, and/or the preparation of training data according to any one of claims 1-5.

15. A system for training of a machine-learning model in vehicle safety action assessment for a two-wheeled or a three-wheeled vehicle (1), for communication of information, for enabling implementation of the machine-learning model according to any one of claims 1-5, and for enabling the preparation of training data according to any one of claims 1-5;
where the system comprises a machine-learning model, sensors (2, 3, 4, 5, 6) acquiring sensor data (100), and means (93, 200) for processing data;
wherein the system utilizes the computer program (310) according to claim 13, and/or the computer readable medium (330) according to claim 13.
